(19) Europäisches Patentamt
European Patent Office
Office européen des brevets

(11) **EP 3 048 719 B1**

(12) **EUROPÄISCHE PATENTSCHRIFT**

(45) Veröffentlichungstag und Bekanntmachung des Hinweises auf die Patenterteilung:
**19.04.2023  Patentblatt 2023/16**

(21) Anmeldenummer: **16000107.9**

(22) Anmeldetag: **18.01.2016**

(51) Internationale Patentklassifikation (IPC):
*H02P 9/04* (2006.01)   *F02D 29/06* (2006.01)
*F02D 19/02* (2006.01)   *F02D 41/10* (2006.01)
*F02M 21/02* (2006.01)   *F02D 41/00* (2006.01)
*F02D 41/14* (2006.01)   *F02D 41/02* (2006.01)
*F02B 37/16* (2006.01)   *F02B 37/18* (2006.01)
*F02B 53/02* (2006.01)   *F02B 53/10* (2006.01)

(52) Gemeinsame Patentklassifikation (CPC):
**F02D 41/107; F02D 29/06; F02D 41/0007;**
**F02D 41/0205; F02D 41/021; F02M 21/02;**
**H02P 9/04;** F02B 37/16; F02B 37/18; F02B 53/02;
F02B 53/10; F02D 19/023; F02D 2041/1433;
F02D 2200/101; F02D 2200/1012;   (Forts.)

(54) **VERFAHREN ZUM BETREIBEN EINER ANORDNUNG UMFASSEND EINE ROTIERENDE ARBEITSMASCHINE**

METHOD FOR OPERATING AN ASSEMBLY COMPRISING A ROTARY WORK MACHINE

PROCEDE DE FONCTIONNEMENT D'UN SYSTEME COMPRENANT UNE MACHINE-OUTIL ROTATIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2015  AT 292015**

(43) Veröffentlichungstag der Anmeldung:
**27.07.2016  Patentblatt 2016/30**

(73) Patentinhaber: **Innio Jenbacher GmbH & Co OG**
**6200 Jenbach (AT)**

(72) Erfinder:
• **Graus, Mario**
**6068 Mils (AT)**
• **Lopez, Francisco**
**6020 Innsbruck (AT)**
• **Schaumberger, Herbert**
**6232 Münster (AT)**
• **Spyra, Nikolaus**
**6020 Innsbruck (AT)**
• **Hirzinger-Unterrainer, Johann**
**6345 Kössen (AT)**

(74) Vertreter: **Torggler & Hofmann Patentanwälte - Innsbruck**
**Torggler & Hofmann Patentanwälte GmbH & Co KG**
**Postfach 85**
**6020 Innsbruck (AT)**

(56) Entgegenhaltungen:
**EP-A1- 0 903 469     EP-A2- 2 112 761**
**EP-B1- 3 294 610     WO-A2-2012/135258**
**DE-B3- 10 253 739    US-A1- 2011 175 372**
**US-A1- 2012 175 876**

- **RYAN M J ET AL: "A POWER-MAPPING VARIABLE-SPEED CONTROL TECHNIQUE FOR A CONSTANT-FREQUENCY CONVERSION SYSTEM POWERED BY A IC ENGINE AND PM GENERATOR", CONFERENCE RECORD OF THE 2000 IEEE INDUSTRY APPLICATIONS CONFERENCE. 35TH IAS ANNUAL MEETING AND WORLD CONFERENCE ON INDUSTRIAL APPLICATIONS OF ELECTRICAL ENERGY. ROME, ITALY, OCT. 8 - 12, 2000; [CONFERENCE RECORD OF THE IEEE INDUSTRY APPLICATIONS CO, Bd. CONF. 35, 8. Oktober 2000 (2000-10-08) , Seiten 2376-2382, XP001042641, DOI: 10.1109/IAS.2000.883156 ISBN: 978-0-7803-6402-8**

(52) Gemeinsame Patentklassifikation (CPC): (Forts.)
F02D 2250/21; H02P 2101/25; Y02B 70/3225; Y02T 10/12; Y02T 10/30; Y04S 20/222

**Beschreibung**

Die vorliegende Erfindung betrifft ein Verfahren zum Betreiben einer Anordnung umfassend eine rotierende Antriebsmaschine sowie eine Anordnung umfassend eine rotierende Antriebmaschine und eine Kontrolleinheit zur Steuerung und/oder Regelung der Anordnung.

Die WO 2012/135258 A2 offenbart einen Motor, der einen elektrischen Generator antreibt.

Die EP 0903469 A1 offenbart eine Gasturbine, die ebenfalls einen Generator antreibt.

Weder die WO 2012/135258 A2 noch die EP 0903469 A1 offenbaren das Regeln oder Steuern einer Umblasung, das Schließen eines Treibstoffventils oder das Verändern der Last der Anordnung durch einen Bremswiderstand.

Die US 2012/175876 A1 offenbart ein Verfahren zum Kompensieren eines Netzfehlers ("low voltage grid ride through", LVRT) für eine Anordnung aus einem Motor und einem davon angetriebenen Generator. Nicht offenbart ist die Verwendung eines Laständerungswerts zum Erkennen des Netzfehlers.

In der WO 2010/134994 A1 wird eine Anordnung aus einem Verbrennungsmotor und einen davon angetriebenen Generator beschrieben. Dabei werden die Signale verschiedener Sensoren am Verbrennungsmotor und am Generator einer Kontrolleinheit zugeführt.

Tritt nun eine Veränderung der von der Anordnung abgegebenen Leistung auf, führt dies zunächst zu einer Veränderung der Drehzahl des Verbrennungsmotors, was in weiterer Folge zu Phasen und Frequenzverschiebungen am Generator führen kann. Die durch die Anordnung versorgten elektrischen Verbraucher müssten dies kompensieren können. Es ist daher in der Praxis im Normalfall vorgesehen, die Anordnung so zu regeln oder zu steuern, dass eine Drehung eines Rotors des Generators eine Drehzahl aufweist, welche so konstant wie möglich ist.

Tritt nun bei der in der WO 2010/134994 A1 vorgeschlagenen Anordnung eine solche Änderung der Leistungsabnahme auf, wird ein veränderter Zustand der Anordnung erfasst. Die Kontrolleinheit ändert daraufhin die Regelung oder die Steuerung so, dass sich die Ist-Werte der an der Anordnung vorliegenden Parameter wieder an die für den stationären Betrieb der Anordnung geeigneten Sollwerte anpassen.

Leider gestaltet sich die Reaktion der Kontrolleinheit und der Anordnung als gesamtes als relativ träge, sodass die versorgten Verbraucher mit den bereits erwähnten Frequenz- und Phasenverschiebungen zu kämpfen haben.

Naturgemäß vergrößert sich dieses Problem, je größer die Veränderung der Leistungsabnahme ist. Ist der Abnehmer der Anordnung nicht ein öffentliches Stromnetz, sondern - rein beispielsweise - durch eine Anzahl von Pumpen gegeben, so können durch das Abschalten eines Teils der Pumpen Leistungsänderungen von mehr als 50% der Nominalleistung hervorgerufen werden. Es ist klar, dass Lastabwürfe dieser Größenordnung für die im Stand der Technik bekannten Anordnungen große Herausforderungen darstellen, wenn die Anforderungen so gestaltet sind, dass keine komplette Abschaltung der Anordnung bzw. unakzeptabel große Veränderungen in Frequenz und Phase auftreten sollen.

Aufgabe der Erfindung ist es daher, ein Verfahren bereit zu stellen, das auch bei großen Lastabwürfen, einen stabileren Betrieb der Anordnung erlaubt. Es soll ebenfalls eine Vorrichtung zur Durchführung eines derartigen Verfahrens bereitgestellt werden. Hinsichtlich des Verfahrens wird diese Aufgabe durch die Merkmale des Anspruchs 1 gelöst. Hinsichtlich der Vorrichtung wird diese Aufgabe durch die Merkmale des Anspruchs 9 gelöst.

Dies geschieht, indem ein für eine Änderung einer Leistungsabgabe der Anordnung charakteristischer Wert durch Messung zumindest eines Parameters und/oder Berechnung bereitgestellt wird und

- die rotierende Antriebsmaschine in Abhängigkeit des für die Änderung der Leistungsabgabe der Anordnung charakteristischen Wertes so gesteuert und/oder geregelt wird und/oder
- eine Last der rotierenden Antriebsmaschine in Abhängigkeit des für die Änderung der Leistungsabgabe der Anordnung charakteristischen Wertes so verändert wird,

dass die Änderung der Leistungsabgabe der Anordnung im Wesentlichen ausgeglichen wird.

Ein Aspekt der Erfindung besteht darin, dass durch die Bereitstellung eines für eine Änderung einer Leistungsabgabe der Anordnung charakteristischen Laständerungswerts eine schnellere Reaktion auf die geänderte Leistungsabnahme möglich ist. Insbesondere ist es möglich, die Sollwerte für die Steuerung bzw. Regelung der Anordnung schneller so einzustellen, dass sie der Leistungsabnahme nach dem Lastabwurf entsprechen. Dies ermöglicht eine deutlich schnellere Reaktion als das schrittweise Nachführen der Sollwerte in bloßer Abhängigkeit vom Zustand der rotierenden Antriebsmaschine.

Erfindungsgemäß kann dazu ein Regelorgan zur Ladedruckregelung in Form einer Umblasung zur Umgehung eines Verdichters eines Turboladers gesteuert oder geregelt werden und/oder ein Treibstoffventil geregelt oder gesteuert geschlossen werden.

Es ist aber auch möglich, die Last der rotierenden Antriebsmaschine so zu verändern, dass die Änderung der Leistungsabgabe kompensiert wird. Um dies zu erreichen, können erfindungsgemäß Bremswiderstände, verwendet werden, die einem elektrischen Generator nachgeschaltet sind, der von der rotierenden Arbeitsmaschine angetrieben wird.

Es können zusätzlich mechanische Bremsen oder Speicherstrukturen verwendet werden, die Energie entweder direkt an einer angetriebenen Welle oder auf der elektrischen Seite des Generators abziehen.

Ein Laständerungswert wird erfindungsgemäß als für die Änderung der Leistungsabgabe der Anordnung charakteristischer Wert verwendet. Hierdurch ist es besonders schnell möglich, Sollwerte der Motorregelung so einzustellen, dass sie für das Erreichen bzw. Halten eines neuen Leistungsniveaus gut geeignet sind. Insbesondere erlaubt dies eine Vorsteuerung vieler Parameter der Anordnung.

Eine erfindungsgemäße Vorrichtung kann nicht nur zur Bereitstellung elektrischer Energie für ein (öffentliches) Energieversorgungsnetz, sondern auch zur Versorgung einiger weniger Verbraucher in einer abgeschlossenen Umgebung (so genannter "Inselbetrieb") verwendet werden.

Von der Steuerung und/oder Regelung kann berücksichtigt werden, dass bei Laständerungen nicht vernachlässigbare Torsionen (Verdrehungen) beispielsweise der Kurbelwelle auftreten, wodurch kurzfristig Energie im System gespeichert und dann wieder freigesetzt wird. Dies kann dazu führen, dass der Betrag des Laständerungswertes unterschätzt wird, da erst eine leicht verspätete Antwort beispielsweise in den Messwerten eines Drehzahlsensors ankommt.

Weitere vorteilhafte Ausführungsformen der Erfindung sind in den abhängigen Ansprüchen definiert.

Verschiedene Elemente der rotierenden Antriebsmaschine können in Abhängigkeit des für die Änderung der Leistungsabgabe der Anordnung charakteristischen Wertes gesteuert oder geregelt werden, und zwar sowohl unabhängig voneinander als auch in Kombination. Beispiele sind das erfindungsgemäße Treibstoffventil und/oder eine Drosselklappe. Auch ein Zündzeitpunkt kann in Abhängigkeit des für die Änderung der Leistungsabgabe der Anordnung charakteristischen Wertes verändert werden. Es ist ebenfalls möglich eine Zündung zumindest eines Zylinders der rotierenden Antriebsmaschine in Abhängigkeit des für die Änderung der Leistungsabgabe der Anordnung charakteristischen Wertes auszusetzen. Die verschiedenen erwähnten Maßnahmen haben verschiedene Vor- und Nachteile.

Beispielsweise das Aussetzen der Zündung zeigt zwar sehr schnell Wirkung, kann aber zu unkontrollierten Verbrennungen im Abgastrakt (Verpuffungen und Ähnlichem) führen, da nicht verbrannter Treibstoff in den Abgastrakt geraten kann. Die Steuerung oder die Regelung des Treibstoffventils auf der anderen Seite benötigt zwar etwas längere Zeitskalen, zeigt dafür aber nachhaltigere Wirkung, die Leistungsabgabe der rotierenden Antriebsmaschine auf einem neuen Niveau zu stabilisieren.

Die Verwendung einer Drosselklappe als Aktuator zeichnet sich durch eine verzögerte Reaktion auf die Steuerung oder Regelung aus, die durch die bereits im Verteilerraum befindliche Gasmenge verursacht wird. Nach diesem Verzug bietet die Drosselklappe allerdings sehr starke Steuer- oder Regelungseffekte. Ähnliches gilt für eventuell an einem Turbolader vorhandene Umblasventile (auch: Umblasung) oder Wastegates (umgehen jeweils den Verdichter oder die Turbine).

Die Verschiebung des Zündzeitpunkts hingegen hat eine fast instantane Wirkung durch Veränderung des Verbrennungswirkungsgrades. Der Regeleffekt fällt jedoch relativ gering aus, sodass es insbesondere bei großen Lastabwürfen nicht ausreicht nur den Zündzeitpunkt zu verschieben.

Der für die Änderung der Leistungsabgabe der Anordnung charakteristische Laständerungswert kann auf verschiedene Weisen bereitgestellt werden. In einer besonders bevorzugten Ausführungsform kann es vorgesehen sein, dass ein für eine Drehung einer von der rotierenden Antriebsmaschine angetriebenen Welle charakteristischer Parameter gemessen wird und der für die Änderung der Leistungsabgabe der Anordnung charakteristische Wert aus dem gemessenen Parameter berechnet wird. Der für die Drehung der von der rotierenden Antriebsmaschine angetriebenen Welle charakteristische Parameter kann beispielsweise eine Drehzahl und/oder eine Winkelgeschwindigkeit der angetriebenen Welle sein. Ein Laständerungswert kann dann mittels der Formel

$$\Delta P = J \, \omega \, \frac{d\omega}{dt}$$

berechnet werden, wobei $\omega$ die Winkelgeschwindigkeit der angetriebenen Welle bezeichnet. J bezeichnet das Trägheitsmoment aller rotierenden Massen der Anordnung zusammen mit dem Trägheitsmoment, das durch den Widerstand weiterer bewegter Teile (Pleuel, Kolben usw.) entsteht.

Der für die Drehung der von der rotierenden Antriebsmaschine angetriebenen Welle charakteristische Parameter kann an verschiedenen Stellen gemessen werden. In einer besonders bevorzugten Ausführungsform geschieht dies an einer Kurbelwelle der rotierenden Antriebsmaschine, wobei es natürlich auch möglich ist, diesen Parameter beispielsweise am Generator zu messen.

Weiterhin kann es besonders bevorzugt vorgesehen sein, dass ein Messsignal aus der Messung des für die Drehung der von der rotierenden Antriebsmaschine angetriebenen Welle charakteristischen Parameters - vorzugsweise mittels eines Bandpassfilters - zu filtern. Beispielsweise durch Vibrationen erzeugtes Rauschen des Sensors kann hierdurch herausgefiltert werden, was eine genauere Bestimmung des für die Änderung der Leistungsabgabe der Anordnung charakteristischen Wertes erlaubt.

Die rotierende Antriebsmaschine kann besonders bevorzugt als ein Verbrennungsmotor - insbesondere ein (bevorzugt gemischaufgeladener) Gasmotor - ausgebildet sein. Die Erfindung kann aber auch ohne weiteres bei beispielsweise Dampfturbinen und Ähnlichem eingesetzt werden.

Weitere Vorteile und Einzelheiten der Erfindung ergeben sich anhand der Figuren sowie der dazugehörigen Figurenbeschreibung. Dabei zeigen:

Fig. 1    eine schematische Darstellung einer erfindungsgemäßen Vorrichtung

Fig. 2    ein Flussdiagramm eines erfindungsgemäßen Verfahrens sowie

Fig. 3    zwei Diagramme zur Regelung oder Steuerung eines Treibstoffventils.

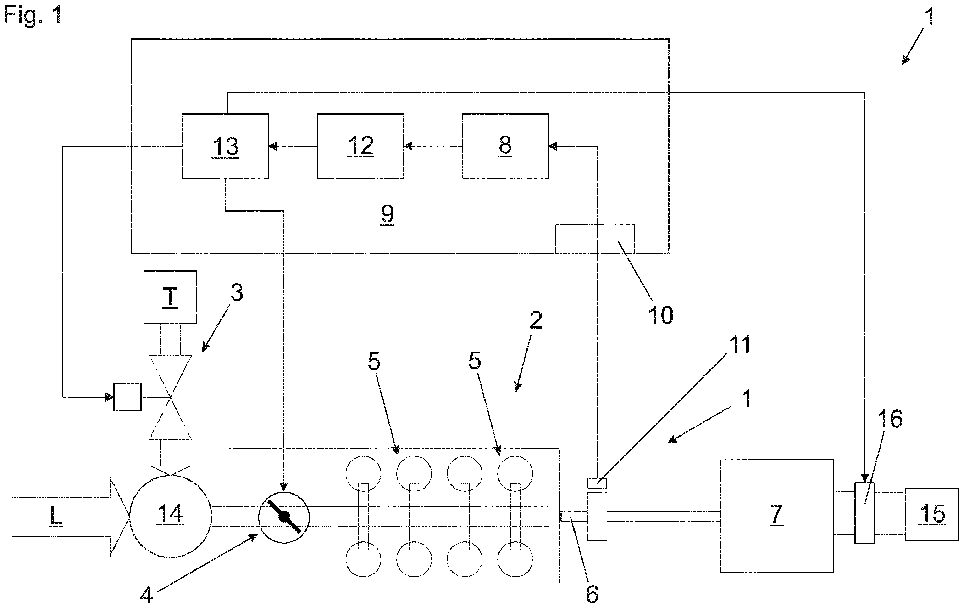

Die in Figur 1 dargestellte erfindungsgemäße Anordnung 1 umfasst einen Verbrennungsmotor 2 - in diesem Fall ein Gasmotor - welcher einen Generator 7 antreibt. In dieser Konfiguration wird die Anordnung als Genset bezeichnet.

Der Verbrennungsmotor 2 verfügt über mehrere Zylinder 5. In diesem Ausführungsbeispiel sind konkret acht Zylinder 5 dargestellt, wobei die genaue Anzahl der Zylinder für die vorliegende Erfindung nicht wesentlich ist. Sie kann insbesondere bei einer Zylinderzahl von 8 bis 24 eingesetzt werden.

Der Verbrennungsmotor 2 verfügt über eine Treibstoffquelle T und ein Treibstoffventil 3. Über dieses werden einer Mischeinrichtung 14 Treibstoff T und Luft L zugeführt. Das entstandene Gemisch wird über eine Drosselklappe 4 Zylindern 5 zugeführt. Die durch Zylinder 5 angetriebene Kurbelwelle 6 treibt ihrerseits einen Rotor des Generators 7 an. Die im Generator 7 bereitgestellte elektrische Energie wird einem oder mehreren Verbrauchern 15 zugeführt.

An der Kurbelwelle 6 bzw. an der rotierenden Einheit ist ein Sensor 11 positioniert, welcher in diesem Ausführungsbeispiel die Drehzahl N misst. Die Messsignale werden über eine Eingabeschnittstelle 10 einer Kontrolleinheit 9 zugeführt. Das Messsignal wird zunächst mittels eines Filters 8 - in diesem Fall ein Bandpassfilter - gefiltert und einer Berechnungseinheit 12 zugeführt. Die Berechnungseinheit 12 berechnet gemäß der Formel

$$\Delta P = J\,\omega\,\frac{d\omega}{dt}$$

den Laständerungswert $\Delta P$, wobei $\omega$ die aus dem gefilterten Messsignal N_filt berechnete Winkelgeschwindigkeit ist und J das effektive Trägheitsmoment aller rotierenden bzw. bewegten Massen bezeichnet ($\frac{d}{dt}$ bezeichnet natürlich die zeitliche Ableitung).

Falls die Anordnung nicht mit nur einem Massensystem abgebildet werden kann, muss dies mit einer Erweiterung durch die Kombination mehrerer Trägheitsmomente und Winkelgeschwindigkeiten berechnet werden.

Der Laständerungswert wird einer Regel- und/oder Steuereinheit 13 zugeführt, welche in Abhängigkeit des Laständerungswertes $\Delta P$ verschiedene Maßnahmen trifft. Hierzu ist die Regel- und/oder Steuereinheit 13 mit dem Treibstoffventil 3, der Drosselklappe 4 sowie optional einem Bremswiderstand 16 (Lastbank), welcher dem Generator 7 nachgeschaltet ist, verbunden.

Alternativ oder zusätzlich können andere Aktuatoren zur Regelung oder Steuerung beispielsweise des Ladedrucks zum Einsatz kommen. Beispiele sind das erfindungsgemäße Umblasventil oder ein sogenanntes Wastegate. Ersteres erlaubt einem Teilluftstrom die Umgehung eines Verdichters eines Turboladers. Zweiteres funktioniert analog bei einer Turbine eines Turboladers.

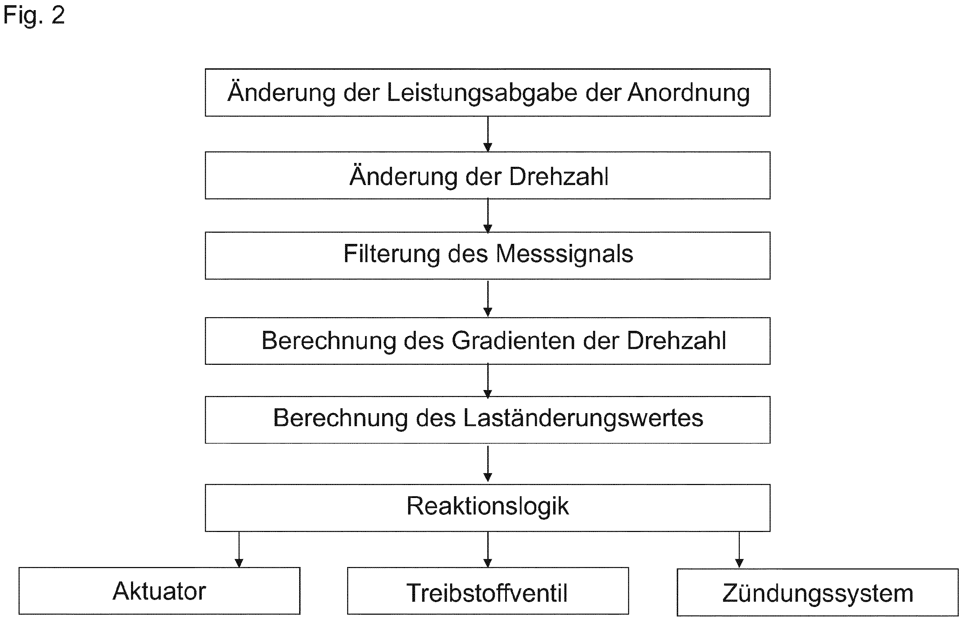

Figur 2 zeigt ein Flussdiagramm eines Ausführungsbeispiels eines erfindungsgemäßen Verfahrens. Nach einer Änderung der Leistungsabgabe der Anordnung reagiert die rotierende Antriebsmaschine mit einer Änderung der Drehzahl. Diese wird gemessen und gefiltert. Aus dem gefilterten Messsignal kann der Gradient der Drehzahländerung berechnet werden. Mithilfe desselben kann ein Laständerungswert bestimmt werden. Dieser wird einer Reaktionslogik zugeführt, welche in Abhängigkeit des Laständerungswertes verschiedene Maßnahmen trifft. Beispiele für die Maßnahmen wären die Regelung oder Steuerung der Drosselklappe und/oder des erfindungsgemäßen (Haupt-)Treibstoffventils. Zusätzlich können Aktionen des Zündungssystems verändert werden und/oder weitere Maßnahmen getroffen werden.

Bei einer hohen Leistungsreduktion (Lastabwurf) kann das Treibstoffventil sofort geschlossen werden und für eine von der Höher der Leistungsänderung, der Rotationsleistung oder anderen Betriebsparameter (bspw. Drehzahlverlauf) abhängigen Zeit (100 ms bis 5 s) geschlossen bleiben.

Regelorgane zur Beeinflussung des Ladedrucks (In Fig. 2 kurz "Aktuatoren")) können ebenfalls zur Steuerung oder Regelung eingesetzt werden. Dies wären beispielsweise die bereits erwähnten Drosselklappen, die erfindungsgemäßen Umblasventile oder Wastegates. Die Drosselklappe kann beispielsweise auf eine Stellung eingestellt werden, welche dem neuen nach der Laständerung vorliegenden Leistungsniveau entspricht.

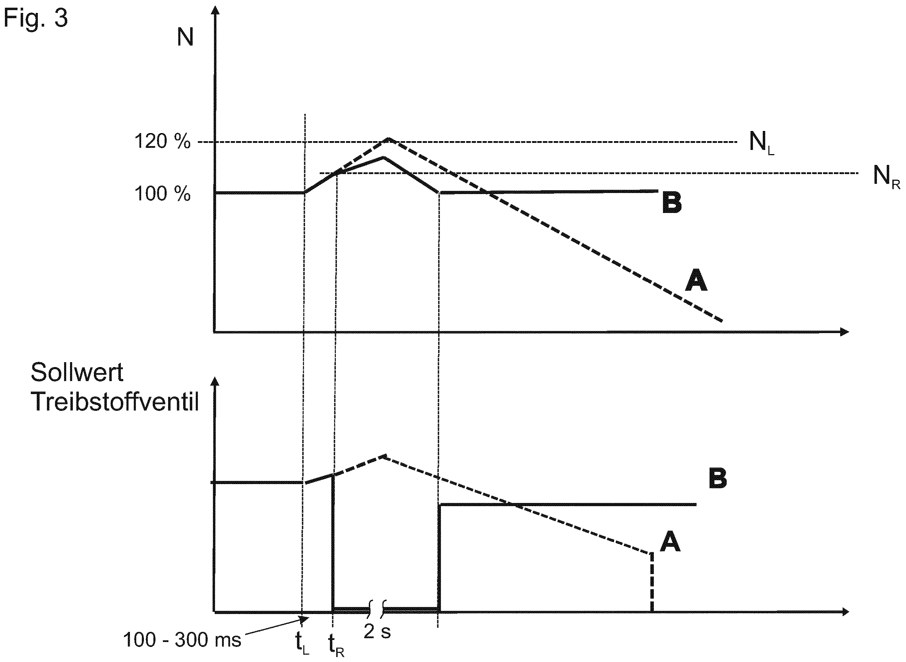

In Figur 3 wird schließlich anhand zweier Diagramme ein Vergleich zwischen einem Verfahren des Standes der Technik und einem erfindungsgemäßen Verfahren vorgestellt. Im oberen Diagramm der Figur 3 ist die Drehzahl der rotierenden Antriebsmaschine dargestellt, im unteren Diagramm der Sollwert für ein Treibstoffventil. Die beiden Größen werden dabei jeweils gegen die Zeit aufgetragen. Zu einem Zeitpunkt $t_L$ tritt eine Änderung der Leistungsabgabe der Anordnung auf - in diesem Fall eine verminderte Leistungsabgabe. Dadurch erhöht sich die Drehzahl der rotierenden Antriebsmaschine.

In diesem Beispiel geht man davon aus, dass die Gemischzusammensetzung konstant bleibt, wodurch sich aufgrund der erhöhten Drehzahl und der dadurch erhöhten Gemischmenge eine kurzzeitige Erhöhung der Treibstoffmenge ergeben kann.

Durch die relativ schnelle Reaktionszeit liegt der Reaktionszeitpunkt $t_R$ relativ nahe am Zeitpunkt $t_L$ der Änderung der Lastabgabe (etwa 100 bis 300 ms in diesem Ausführungsbeispiel). Bei einem relativ großen Lastabwurf kann die Treibstoffzufuhr sofort gesperrt werden, wie im unteren Diagramm der Figur erkennbar ist. Die Dauer der Abschaltung liegt in diesem speziellen Beispiel bei etwa 2 s.

Dies ist die Situation beim erfindungsgemäßen Vorgehen, verdeutlicht durch die Kurven B in Figur 3.

Bei einem Vorgehen gemäß dem Stand der Technik (Kurven A in Figur 3) wird ein Grenzwert $N_L$ vorgegeben. Sobald die Drehzahl diesen Grenzwert erreicht, können verschiedene Maßnahmen getroffen werden (in diesem Beispiel eine sicherheitsbedingte Abschaltung der Maschine). Aufgrund von noch vorhandenem Resttreibstoff im Zuführsystem der rotierenden Antriebsmaschine wird sich zwar die Drehzahl für kurze Zeit noch erhöhen, dann aber wieder absinken. Sobald die Drehzahl wieder in der Nähe der gewünschten Drehzahl gelangt, kann die Treibstoffzufuhr wieder zugeschaltet werden.

Wie aus dem Diagramm ersichtlich ist, liegt dieser Grenzwert $N_L$ weiter weg vom Sollwert für die Drehzahl als die Drehzahl $N_R$, bei welcher erfindungsgemäß reagiert werden kann. Ein robusterer Betrieb der rotierenden Antriebsmaschine ist also gegeben.

**Patentansprüche**

1. Verfahren zum Betreiben einer Anordnung umfassend eine rotierende Antriebsmaschine (2), wobei ein für eine Änderung einer Leistungsabgabe der Anordnung (1) charakteristischer Laständerungswert ($\Delta$P) durch Messung zumindest eines Parameters und/oder Berechnung bereitgestellt wird und

   - die rotierende Antriebsmaschine (2) in Abhängigkeit des Laständerungswerts ($\Delta$P) so gesteuert und/oder geregelt wird und/oder
   - eine Last der rotierenden Antriebsmaschine (2) in Abhängigkeit des Laständerungswerts ($\Delta$P) so verändert wird,
   dass die Änderung der Leistungsabgabe der Anordnung im Wesentlichen ausgeglichen wird, **dadurch gekennzeichnet, dass** im Rahmen der Steuerung oder Regelung in Abhängigkeit des Laständerungswertes ($\Delta$P)
   - ein Regelorgan zur Ladedruckregelung in Form einer Umblasung zur Umgehung eines Verdichters eines Turboladers gesteuert oder geregelt wird und/oder
   - ein Treibstoffventil (3) geschlossen wird und/oder

   - die Last der Antriebsmaschine (2) durch einen einem elektrischen Generator (7) nachgeschalteten Bremswiderstand (16) verändert wird, wobei der Generator (7) mittels der rotierenden Antriebsmaschine (2) angetrieben wird.

2. Verfahren nach Anspruch 1, **dadurch gekennzeichnet, dass** zumindest ein Zündzeitpunkt in Abhängigkeit des Laständerungswerts ($\Delta$P) verändert wird.

3. Verfahren nach einem der Ansprüche 1 oder 2, **dadurch gekennzeichnet, dass** eine Zündung zumindest eines Zylinders (5) der rotierenden Antriebsmaschine (2) in Abhängigkeit des Laständerungswerts ($\Delta$P) ausgesetzt wird.

4. Verfahren nach einem der Ansprüche 1 bis 3, **dadurch gekennzeichnet, dass** ein für eine Drehung einer von der rotierenden Antriebsmaschine (2) angetriebenen Welle (6) charakteristischer Parameter gemessen wird und der Laständerungswert ($\Delta$P) aus dem gemessenen Parameter berechnet wird.

5. Verfahren nach Anspruch 4, **dadurch gekennzeichnet, dass** als für die Drehung der von der rotierenden Antriebsmaschine (2) angetriebenen Welle (6) charakteristischer Parameter eine Drehzahl (N) und/oder eine Winkelgeschwindigkeit (W) der angetriebenen Welle gemessen wird.

6. Verfahren nach Anspruch 5, **dadurch gekennzeichnet, dass** der Laständerungswert ($\Delta$P) mittels der Formel

$$\Delta P = J\,\omega\,\frac{d\omega}{dt}$$

   berechnet wird, wobei $J$ ein effektives Trägheitsmoment aus Beiträgen aller bewegter Massen und $\omega$ die Winkelgeschwindigkeit der angetriebenen Welle bezeichnet.

7. Verfahren nach einem der Ansprüche 4 bis 6, **dadurch gekennzeichnet, dass** der für die Drehung der von der rotierenden Antriebsmaschine (2) angetriebenen Welle (6) charakteristische Parameter an einer Kurbelwelle der rotierenden Antriebsmaschine (2) gemessen wird.

8. Verfahren nach einem der Ansprüche 4 bis 7, **dadurch gekennzeichnet, dass** ein Messsignal aus der Messung des für die Drehung der von der rotierenden Antriebsmaschine (2) angetriebenen Welle (6) charakteristischen Parameters - vorzugsweise mittels eines Tiefpassfilters (8) - gefiltert wird.

9. Anordnung umfassend eine rotierende Antriebsmaschine (2) und eine Kontrolleinheit (9) zur Steuerung und/oder Regelung der Anordnung (1), insbesondere betrieben nach einem der Ansprüche 1 bis 8, wobei die Kontrolleinheit (9) über eine Eingabeschnittstelle (10) verfügt, mittels welcher der Kontrolleinheit (9) ein für eine Änderung einer Leistungsabgabe der Anordnung (1) charakteristischer Laständerungswert und/oder wenigstens ein Parameter übermittelbar ist, wobei der Laständerungswert (ΔP) aus dem wenigstens einen Parameter bestimmbar ist, und dass die Kontrolleinheit (9) dazu ausgebildet ist,

- die rotierende Antriebsmaschine (2) in Abhängigkeit des Laständerungswerts (ΔP) so zu steuern und/oder zu regeln und/oder
- eine Last der rotierenden Antriebsmaschine (2) in Abhängigkeit des Laständerungswerts (ΔP) so zu verändern,
dass die Änderung der Leistungsabgabe der Anordnung (1) im Wesentlichen ausgeglichen wird, **dadurch gekennzeichnet, dass** die Kontrolleinheit (9) dazu ausgebildet ist, in Abhängigkeit des Laständerungswertes (ΔP)
- ein Regelorgan zur Ladedruckregelung in Form einer Umblasung zur Umgehung eines Verdichters eines Turboladers zu steuern oder zu regeln und/oder
- ein Treibstoffventil (3) zu schließen und/oder
- die Last der Antriebsmaschine (2) durch einen einem Generator (7) nachgeschalteten Bremswiderstand (16) zu verändern, wobei die rotierende Antriebsmaschine (2) den Generator (7) antreibt.

10. Anordnung nach Anspruch 9, **dadurch gekennzeichnet, dass** ein mit der Kontrolleinheit (9) verbundener Sensor (11) zur Messung einer für die Drehung einer von der rotierenden Antriebsmaschine (2) angetriebenen Welle (6) charakteristischen Parameters vorgesehen ist, wobei die Kontrolleinheit (9) dazu ausgebildet ist, aus einer zeitlichen Änderung des vom Sensor (11) gemessenen für die Drehung der angetriebenen Welle (6) charakteristischen Parameters den Laständerungswert (ΔP) zu berechnen.

11. Anordnung nach Anspruch 9 oder 10, **dadurch gekennzeichnet, dass** ein durch die rotierende Antriebsmaschine (2) angetriebener Generator (7) vorgesehen ist.

12. Anordnung nach einem der Ansprüche 9 bis 11, **dadurch gekennzeichnet, dass** die rotierende Antriebsmaschine (2) ein Verbrennungsmotor - insbesondere ein Gasmotor - ist.

## Claims

1. A method for operating an arrangement comprising a rotating drive machine (2), wherein a load change value (ΔP) characteristic of a change of a power output of the arrangement (1) is provided by measuring at least one parameter and/or calculation and

- the rotating drive machine (2) is controlled and/or regulated as a function of the load change value (ΔP) and/or
- a load of the rotating drive machine (2) is changed as a function of the load change value (ΔP),
such that the change of the power output of the arrangement is substantially compensated, **characterised in that** within the controlling or regulating as a function of the load change value (ΔP)
- a regulating element for the load pressure regulation in the form of a bypass for bypassing a compressor of a turbocharger is controlled or regulated and/or
- a fuel valve (3) is closed and/or
- the load of the rotating drive machine (2) is changed by a brake resistor (16) which is arranged downstream of an electric generator (7), wherein the generator (7) is driven by the rotating drive machine (2).

2. The method according to one of claims 1, **characterized in that** at least one ignition time is changed as a function of the load change value (ΔP).

3. The method according to one of claims 1 or 2, **characterized in that** an ignition of at least one cylinder (5) of the rotating drive machine (2) is suspended as a function of the load change value (ΔP).

4. The method according to one of claims 1 to 3, **characterized in that** a parameter characteristic of a rotation of a shaft (6) driven by the rotating drive machine (2) is measured and the load change value (ΔP) is calculated from the measured parameter.

5. The method according to claim 4, **characterized in that** a rotational speed (N) and/or an angular speed (W) of the driven shaft is measured as the parameter characteristic of the rotation of the shaft (6) driven by the rotating drive machine (2).

6. The method according to claim 5, **characterized in that** the load change value (ΔP) is calculated by means of the formula,

$$\Delta P = J\, \omega\, \frac{d\omega}{dt}$$

wherein J denotes an effective moment of inertia from inputs of all moved masses and ω denotes the angular speed of the driven shaft.

7. The method according to one of claims 4 to 6, **characterized in that** the parameter characteristic of the rotation of the shaft (6) driven by the rotating drive machine (2) is measured at a crankshaft of the rotating drive machine (2).

8. The method according to one of claims 4 to 7, **characterized in that** a measurement signal is filtered from the measuring of the parameter characteristic of the rotation of the shaft (6) driven by the rotating drive machine (2), preferably by means of a low-pass filter (8).

9. An arrangement comprising a rotating drive machine (2) and a control unit (9) for controlling and/or regulating the arrangement (1), in particular operating according to any one of claims 1 to 8, wherein the control unit (9) has an input interface (10), by means of which a load change value characteristic of a change of a power output of the arrangement (1) and/or at least one parameter is transmittable to the control unit (9), wherein the load change value (ΔP) is determinable from the at least one parameter, and in that the control unit (9) is designed

  - to control and/or to regulate the rotating drive machine (2) as a function of the load change value (ΔP) and/or
  - to change a load of the rotating drive machine (2) as a function of the load change value (ΔP), such that the change of the power output of the arrangement (1) is substantially compensated, **characterized in that** the control unit (9) is designed as a function of the load change value (ΔP)
  - to control or regulate a regulating element for the load pressure regulation in the form of a bypass for bypassing a compressor of a turbocharger and/or
  - to close a fuel valve (3) and/or
  - to change the load of the rotating drive machine (2) by a brake resistor (16) which is arranged downstream of an electric generator (7), wherein the generator (7) is driven by the rotating drive machine (2).

10. The arrangement according to claim 9, **characterized in that** a sensor (11) connected to the control unit (9) for measuring a parameter characteristic of the rotation of a shaft (6) driven by the rotating drive machine (2) is provided, wherein the control unit (9) is designed to calculate the load change value (ΔP) from a temporal change of the parameter characteristic of the rotation of the driven shaft (6) measured by the sensor (11).

11. The arrangement according to claim 9 or 10, **characterized in that** a generator (7) driven by the rotating drive machine (2) is provided.

12. The arrangement according to one of claims 9 to 11, **characterized in that** the rotating drive machine (2) is a combustion engine, in particular a gas engine.

## Revendications

1. Procédé pour faire fonctionner un ensemble comprenant un moteur d'entraînement rotatif (2), dans lequel une valeur de modification de charge (ΔP) caractéristique d'une modification d'une puissance fournie de l'ensemble (1) est fournie par mesure d'au moins un paramètre et/ou calcul et

  - le moteur d'entraînement rotatif (2) est commandé et/ou régulé en fonction de la valeur de modification de charge (ΔP) et/ou
  - une charge du moteur d'entraînement rotatif (2) est modifiée en fonction de la valeur de modification de charge (ΔP), de sorte que la modification de la puissance fournie de l'ensemble est sensiblement compensée, **caractérisé en ce que** dans le cadre de la commande ou régulation en fonction de la valeur de modification de charge (ΔP)
  - un organe de régulation pour la régulation de pression de suralimentation sous forme d'une dérivation d'air pour le contournement d'un compresseur d'un turbocompresseur est commandé ou régulé et/ou
  - une vanne de carburant (3) est fermée et/ou
  - la charge du moteur d'entraînement rotatif (2) est modifiée par une résistance de freinage (16) montée en aval d'un générateur (7) électrique, dans lequel le générateur (7) est entraîné au moyen du moteur d'entraînement rotatif (2).

2. Procédé selon la revendication 1, **caractérisé en ce qu'**au moins un moment d'allumage est modifié en fonction de la valeur de modification de charge (ΔP).

3. Procédé selon l'une quelconque des revendications 1 ou 2, **caractérisé en ce qu'**un allumage d'au moins un cylindre (5) du moteur d'entraînement rotatif (2) est suspendu en fonction de la valeur de modification de charge (ΔP).

4. Procédé selon l'une quelconque des revendications 1 à 3, **caractérisé en ce qu'**un paramètre caractéristique d'une rotation d'un arbre (6) entraîné par le moteur d'entraînement rotatif (2) est mesuré et la valeur de modification de charge (ΔP) est calculée à partir du paramètre mesuré.

5. Procédé selon la revendication 4, **caractérisé en ce qu'**en tant que paramètre caractéristique de la rotation de l'arbre (6) entraîné par le moteur d'entraînement rotatif (2) une vitesse de rotation (N) et/ou une vitesse angulaire (W) de l'arbre entraîné est mesurée.

6. Procédé selon la revendication 5, **caractérisé en ce que** la valeur de modification de charge (ΔP) est calculée au moyen de la formule

$$\Delta P = J\,\omega\,\frac{d\omega}{dt}$$

dans lequel J désigne un moment d'inertie effectif composé de tous les apports de toutes les masses déplacées et ω la vitesse angulaire de l'arbre entraîné.

7. Procédé selon l'une quelconque des revendications 4 à 6, **caractérisé en ce que** le paramètre caractéristique de la rotation de l'arbre (6) entraîné par le moteur d'entraînement rotatif (2) est mesuré sur un vilebrequin du moteur d'entraînement rotatif (2).

8. Procédé selon l'une quelconque des revendications 4 à 7, **caractérisé en ce qu'**un signal de mesure est filtré à partir de la mesure du paramètre caractéristique de la rotation de l'arbre (6) entraîné par le moteur d'entraînement rotatif (2) - de préférence au moyen d'un filtre passe-bas (8).

9. Ensemble comprenant un moteur d'entraînement rotatif (2) et une unité de contrôle (9) pour la commande et/ou régulation de l'ensemble (1), en particulier fonctionnant selon l'une quelconque des revendications 1 à 8, dans lequel l'unité de contrôle (9) dispose d'une interface d'entrée (10), au moyen de laquelle une valeur de modification de charge caractéristique d'une modification d'une puissance fournie de l'ensemble (1) et/ou au moins un paramètre peut être transmis (e) à l'unité de contrôle (9), dans lequel la valeur de modification de charge (ΔP) peut être déterminée à partir du au moins un paramètre, et que l'unité de contrôle (9) est réalisée

- pour commander et/ou pour réguler le moteur d'entraînement rotatif (2) en fonction de la valeur de modification de charge (ΔP) et/ou
- pour modifier une charge du moteur d'entraînement rotatif (2) en fonction de la valeur de modification de charge (ΔP), de sorte que la modification de la puissance fournie de l'ensemble (1) est sensiblement compensée, **caractérisé en ce que** l'unité de contrôle (9) est réalisée, en fonction de la valeur de modification de charge (ΔP),
- pour commander ou pour réguler un organe de régulation pour la régulation de pression de suralimentation sous forme d'une dérivation d'air pour le contournement d'un compresseur d'un turbocompresseur et/ou
- pour fermer une vanne de carburant (3) et/ou
- pour modifier la charge du moteur d'entraînement rotatif (2) par une résistance de freinage (16) montée en aval d'un générateur (7), dans lequel le moteur d'entraînement rotatif (2) entraîne le générateur.

10. Ensemble selon la revendication 9, **caractérisé en ce qu'**un capteur (11) relié à l'unité de contrôle (9) est prévu pour la mesure d'un paramètre caractéristique de la rotation d'un arbre (6) entraîné par le moteur d'entraînement rotatif (2), dans lequel l'unité de contrôle (9) est réalisée pour calculer à partir d'une modification temporelle du paramètre caractéristique de la rotation de l'arbre (6) entraîné mesuré par le capteur (11) la valeur de modification de charge (ΔP).

11. Ensemble selon la revendication 9 ou 10, **caractérisé en ce qu'**un générateur (7) entraîné par le moteur d'entraînement rotatif (2) est prévu.

12. Ensemble selon l'une quelconque des revendications 9 à 11, **caractérisé en ce que** le moteur d'entraînement rotatif (2) est un moteur à combustion interne - en particulier un moteur à gaz.

Fig. 1

## Fig. 2

```
┌─────────────────────────────────────────────────────┐
│        Änderung der Leistungsabgabe der Anordnung     │
└─────────────────────────────────────────────────────┘
                          │
                          ▼
┌─────────────────────────────────────────────────────┐
│                  Änderung der Drehzahl                │
└─────────────────────────────────────────────────────┘
                          │
                          ▼
┌─────────────────────────────────────────────────────┐
│              Filterung des Messsignals               │
└─────────────────────────────────────────────────────┘
                          │
                          ▼
┌─────────────────────────────────────────────────────┐
│          Berechnung des Gradienten der Drehzahl       │
└─────────────────────────────────────────────────────┘
                          │
                          ▼
┌─────────────────────────────────────────────────────┐
│           Berechnung des Laständerungswertes          │
└─────────────────────────────────────────────────────┘
                          │
                          ▼
┌─────────────────────────────────────────────────────┐
│                     Reaktionslogik                    │
└─────────────────────────────────────────────────────┘
        │                 │                    │
        ▼                 ▼                    ▼
┌──────────────┐  ┌──────────────┐   ┌──────────────────┐
│   Aktuator   │  │ Treibstoffventil │ │  Zündungssystem  │
└──────────────┘  └──────────────┘   └──────────────────┘
```

EP 3 048 719 B1

Fig. 3

EP 3 048 719 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012135258 A2
- EP 0903469 A1
- US 2012175876 A1
- WO 2010134994 A1